# FASCICULE DE BREVET EUROPEEN

(11) **EP 2 653 260 B1**
(45) Date de publication et mention de la délivrance du brevet: **03.06.2020**
(21) Numéro de dépôt: 13159858.3
(22) Date de dépôt: 19.03.2013
(51) Int. Cl.: B23K 26/262, B23K 35/02, B23K 35/40

(54) **PROCÉDÉ DE FABRICATION DE FIL FOURRÉ PAR SOUDAGE LASER AVEC PRÉPARATION PRÉALABLE DES BORDS DU FEUILLARD**
HERSTELLVERFAHREN EINES FÜLLDRAHTES DURCH LASERSCHWEISSEN MIT VORHERIGER KANTENBEARBEITUNG DES BLECHSTREIFENS
METHOD FOR MANUFACTURING A CORED WIRE BY LASER WELDING WITH PRIOR PREPARATION OF THE EDGES OF THE METAL STRIP

(30) Priorité: 16.04.2012 FR 1253460
(43) Date de publication de la demande: 23.10.2013
(73) Titulaire: Lincoln Global, Inc., Santa Fe Springs, CA 90670 (US); Lincoln Electric Italia S.r.l., 16010 Serra Ricco (Genoa GE) (IT)
(72) Inventeur: Scappin, Michele, 31003 Castelfranco (IT); Ballerini, Gaia, 75010 PARIS (FR)
(74) Mandataire: Grosse Schumacher Knauer von Hirschhausen

(56) Documents cités:
- EP-A1- 0 739 678
- EP-A1- 2 489 460
- EP-A2- 0 262 363
- WO-A1-2010/102318
- DE-A1-102010 036 426
- JP-A- 56 148 494
- JP-A- 60 124 495

## Description

L'invention concerne un procédé de fabrication d'un fil fourré étanche destiné au soudage à l'arc électrique, dans lequel le feuillard, c'est-à-dire l'enveloppe métallique externe du fil, est d'abord usiné, éventuellement nettoyé, mis en forme de U, rempli avec un flux interne, mis en forme de O, puis soudé par faisceau laser.

Les fils fourrés sont utilisés dans certains procédés de soudage, notamment à l'arc, par exemple en soudage MIG/MAG ou en soudage à l'arc submergé.

Un fil fourré est habituellement constitué d'une enveloppe externe, encore appelée feuillard, formée d'une bande métallique mise sous forme tubulaire, et d'un flux de interne formé d'éléments de remplissage, tels des poudres et/ou des granulés, c'est-à-dire des éléments métalliques, non métalliques ou les deux. Un tel fil fourré est notamment décrit par les documents US-A-6787736 ou FR-A-2766399.

Actuellement, la fabrication d'un fil fourré peut être réalisée selon plusieurs procédés présentant chacune des avantages et des inconvénients.

Selon un procédé connu, on part d'une bande métallique qui est progressivement pliée par des galets formeurs de manière à rapprocher ses deux bords longitudinaux l'un de l'autre, puis remplie avec un flux de remplissage. Dans ce cas, les bords longitudinaux du tube formant le fil ne sont pas soudés et donc le fil n'est pas étanche.

Ce premier procédé est simple à mettre en œuvre et permet de produire des fils avec une composition interne homogène. Toutefois, les fils fourrés ainsi obtenus sont sensibles à la reprise d'humidité. En effet, puisqu'ils ne sont pas étanches, de la vapeur d'eau peut pénétrer dans le fil durant son stockage, ce qui peut conduire à des niveaux d'hydrogène diffusible trop élevés et donc non acceptables dans les cordons de soudure obtenus avec ces fils.

Par ailleurs, selon un autre procédé décrit par les documents EP-A-847831 ou JP-A-58148096, on produit d'abord en continu un fil tubulaire par rapprochement l'un de l'autre des deux bords d'une bande métallique. Les bords sont ensuite soudés par soudage à haute fréquence pour obtenir un tube vide soudé. Le remplissage avec le flux interne s'effectue ensuite, généralement par vibration. Le fil ainsi obtenu peut être laminé, recuit et/ou tréfilé jusqu'au diamètre désiré. Cette technologie permet de produire des fils fourrés étanches, donc insensibles à la reprise en humidité.

Toutefois, son inconvénient majeur réside le risque de ségrégation des matières premières du flux. En effet, si la granulométrie et/ou la granulation des matières premières du flux n'est pas optimisée, on risque d'avoir une distribution non homogène du flux dans le tube du fait du remplissage par vibration, avec formation d'ilots présentant des compositions différentes pouvant engendrer des ruptures du fil lors des étapes de tréfilage ou laminage subséquentes, et/ou des hétérogénéités lors du soudage avec le fil ainsi fabriqué.

Un autre procédé connu décrit par les documents US-A-4,673,121 , GB-A-1199736 , JP-A1 56148494, WO-A-2010102318, DE102010036426 A1 ou EP 2 489 460 A1 combine les avantages des deux précédents et permet de produire des fils fourrés remplis en ligne. Dans ce cas, le fil est produit à partir d'une bande métallique laminée, mise en forme de « U » puis remplie avec le flux. On poursuit le formage pour aboutir à une forme de « O », puis le tube, encore appelé « pré-tube », est alors soudé par exemple par laser à pénétration totale ou partielle, de manière à obtenir un fil étanche. Ensuite, le tube est tréfilé jusqu'à un diamètre intermédiaire où il subi un traitement thermique et il est enfin réduit à son diamètre final.

Toutefois, un tel procédé engendre un risque de fusion ou de modification thermique et chimique du mélange homogène contenu dans le tube. En effet, lorsque le faisceau laser vient impacter les bords de la bande métallique pour les souder, il y a un risque que le faisceau laser passe entre les deux bords et aille impacter les matières premières du flux, par exemple en cas de surpuissance ponctuelle du générateur laser conduisant à une sur-pénétration locale de soudage et/ou en cas de jeu ponctuel excessif entre les bords à souder.

Le faisceau laser va alors engendrer une fusion des matières premières du flux, donc à leur modification thermique et/ou chimique et à la formation de conglomérats durs, tel que des amas durs en forme de sphères, d'aiguilles ou autres, par exemple formés de particules de composition mixte, à savoir métallique et non métallique, de dimensions variables comprises entre quelque micron (µm) et quelques millimètres (mm) dans les cas les plus défavorables.

Or, les amas ou conglomérats durs ainsi formés engendrent des problèmes soit pendant la phase de laminage et tréfilage du tube car ils peuvent déchirer le feuillard, par exemple si la dimension de l'amas dur est supérieure au diamètre interne du tube ; soit pendant l'utilisation du fil car ces conglomérats durs et de grandes dimensions ne fondent pas de manière uniforme et peuvent générer des défauts dans la soudure, tel que manque de matière, composition du métal déposé non homogène, variation incontrôlée des paramètres de soudage... De plus, les poudres peuvent être également modifiées d'un point de vue chimique par la chaleur dégagée par le faisceau laser conduisant à des variations indésirables de leurs propriétés en soudage.

Le problème à résoudre est donc de proposer un procédé de fabrication en continu de fils fourrés soudés et étanches amélioré, c'est-à-dire de fils non ou très peu sensibles à la reprise en humidité, qui soit simple à mettre en oeuvre et permette d'éviter la formation d'amas ou conglomérats durs dans le flux interne de manière à empêcher, à réduire ou à minimiser les incidents lors de leur tréfilage, notamment les ruptures ou déchirements, et/ou les défauts de soudage lors de l'utilisation de ces fils en procédés de soudage, notamment MIG/MAG, à l'arc submergé ou autre.

La solution de l'invention est un procédé de fabrication d'un fil fourré à partir d'une bande métallique, encore appelée « feuillard », et d'un flux interne, encore appelé « flux de remplissage », selon la revendication 1, comprenant les étapes de :
a) conformer une bande métallique ayant deux bords longitudinaux parallèles en une gouttière de section en « U » par rapprochement de ses bords longitudinaux,
b) remplir la gouttière obtenue à l'étape a) avec un flux, c'est-à-dire qu'un flux de remplissage est introduit dans la gouttière obtenue à l'étape a) pour la remplir de préférence au moins partiellement,
c) conformer la gouttière de section en « U » contenant le flux obtenue à l'étape b) par rapprochement jusqu'au contact ou quasi-contact l'un de l'autre, desdits bords longitudinaux pour obtenir un pré-tube de section en « O », et
d) souder au moyen d'un faisceau laser, les bords longitudinaux l'un avec l'autre, caractérisé en ce qu'il comprend en outre une étape supplémentaire:
   i) préalablement à l'étape a), opérer un usinage de la surface latérale d'au moins l'un des deux bords longitudinaux parallèles de la bande métallique pour conférer à ladite au moins une surface latérale dudit au moins un bord longitudinal, une rugosité de surface inférieure à 50 µm.

Selon le cas, le procédé de l'invention peut comprendre l'une ou plusieurs des caractéristiques techniques suivantes :
- à l'étape i), l'usinage est un chanfreinage ou un coupage.
- à l'étape i), le coupage est opéré avec une ou des lames ou un ou des couteaux de préférence en forme de disques, de préférence encore des couteaux ou lames très effilés.
   - à l'étape i), l'usinage est opéré sur la surface latérale des deux bords longitudinaux parallèles de la bande métallique.
   - à l'étape i), on opère un usinage de la surface latérale pour conférer à la surface latérale des bords longitudinaux, une rugosité de surface inférieure à 50 µm, de préférence inférieure ou égale à 10 µm, préférentiellement inférieure ou égale à 5 µm, de préférence encore inférieure ou égale à 1 µm
   - une étape supplémentaire ii) à l'étape c), rapprocher l'un de l'autre les bords longitudinaux jusqu'à obtenir un espacement entre les surfaces latérales desdits bords longitudinaux inférieur à 50 µm, mesuré au point d'impact du faisceau laser avec le ou les bords longitudinaux à souder.
   - à l'étape ii), le rapprochement l'un de l'autre des bords longitudinaux est réalisé au moyen de galets presseurs.
   - à l'étape ii), on rapproche l'un de l'autre les bords longitudinaux jusqu'à obtenir un espacement entre les surfaces latérales desdits bords longitudinaux inférieur à 50 µm, de préférence inférieure ou égale à 10 µm, préférentiellement inférieure ou égale à 5 µm, de préférence encore inférieure ou égale à 1 µm.
   - les étapes a) à d), i) et ii) sont opérées en continu en conférant à la bande métallique une vitesse de déplacement d'au moins 10 m/min, de préférence d'au moins 15 m/min.
   - le faisceau laser vient impacter au moins l'un des bords à souder, après le rapprochement l'un vers l'autre desdits bords longitudinaux à l'étape c), et pendant la mise en contact l'une avec l'autre des surfaces latérales des desdits bords longitudinaux de manière à opérer un soudage et forgeage simultanés desdits bords. Ceci est particulièrement avantageux car cela conduit à un joint entre les deux bords particulièrement étanche et surtout très résistant, donc apte à bien résister sans se rompre aux opérations de tréfilage et laminage subséquentes.
   - il comprend, préalablement à l'étape b), une étape additionnelle de nettoyage et/ou de séchage d'au moins les bords longitudinaux de la bande métallique, en particulier une élimination d'huile (i.e. un dégraissage) avec un solvant, un détergent ou une ou plusieurs enzymes actives, ou leurs mélanges.
   - le solvant utilisé lors du nettoyage est par exemple un hydrocarbure chlorhydrique dérivé de la distillation du pétrole.
   - le détergent utilisé lors du nettoyage est par exemple un détergent alcalin à basse écume.
   - la ou les enzymes utilisées lors du nettoyage sont des enzymes actives dans la décomposition des huiles.
   - le séchage est effectué par balayage avec un flux gazeux, par exemple un flux d'air, par exemple de l'air comprimé et/ou chauffé, c'est-à-dire à une température d'au moins 25°C, de préférence d'au moins 40°C.
   - il comprend en outre au moins l'une des étapes supplémentaires e) à g) suivantes :
      e) laminage du fil fourré étanche obtenu à l'étape d),
      f) recuit du fil fourré étanche obtenu à l'étape d), et/ou
      g) tréfilage du fil fourré étanche obtenu à l'étape d).
   - on obtient un fil fourré soudé ayant un diamètre final compris entre 0,5 et 8 mm, de préférence entre 1 et 5 mm environ.
   - le soudage laser se fait au moyen d'une source laser de type CO₂, à diodes, à disques ou à fibres, notamment à fibres d'ytterbium.
   - la puissance laser du faisceau laser mis en œuvre pendant le soudage est d'au moins 1 kW, généralement d'au moins 2 kW, typiquement comprise entre 3 et 12 kW.
   - la bande métallique est en acier, par exemple de l'acier C-Mn.
   - la bande métallique utilisée à l'étape a) a une épaisseur comprise entre 0,5 et 5 mm, de préférence entre 1 et 3 mm.
   - la bande métallique utilisée à l'étape a) a une largeur comprise entre 20 et 120 mm, de préférence entre 30 et 90 mm, de préférence encore entre 40 et 70 mm.
   - la bande métallique utilisée à l'étape a) a une longueur de plusieurs dizaines de mètres, de préférence de plusieurs centaines de mètres.
   - l'usinage, préférentiellement un chainfreinage ou un coupage, est opéré au moyen d'une ou plusieurs lames en un matériau très dur, tel le carbure de tungstène, un autre carbure, ou un matériau à base de diamant.
   - l'usinage est effectué hors ligne ou en ligne.
   - le flux interne comprend des éléments métalliques et/ou non métalliques.

L'invention porte en outre sur un fil fourré de soudage étanche comprenant une enveloppe externe métallique et un flux interne, lequel est directement obtenu par un procédé selon l'invention et comprend donc tout ou partie des caractéristiques ci-avant. Un tel fil fourré peut être utilisé dans tout procédé de soudage à l'arc, notamment les procédés MIG/MAG, à l'arc submergé ou autre.

L'invention va être mieux comprise grâce aux explications suivantes faites en référence aux Figures annexées parmi lesquelles :
- la Figure 1 est une vue en coupe des bords d'un feuillard de fil fourré, avant soudage, fabriqué selon un procédé de l'art antérieur,
- la Figure 2 est une vue en coupe des bords d'un feuillard, avant soudage, fabriqué avec le procédé de la présente invention,
- la Figure 3 est un schéma comparatif du soudage par laser d'un fil selon l'art antérieur et d'un fil selon l'invention, et
- la Figure 4 schématise les étapes d'un procédé de fabrication selon l'invention.

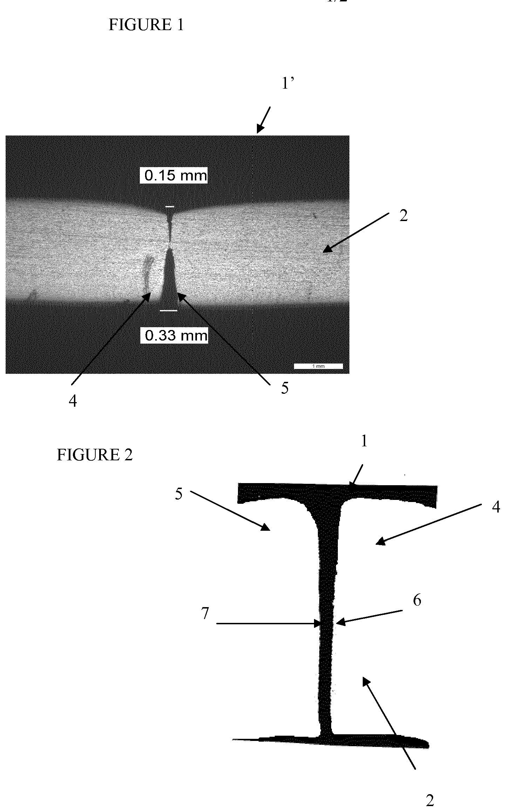

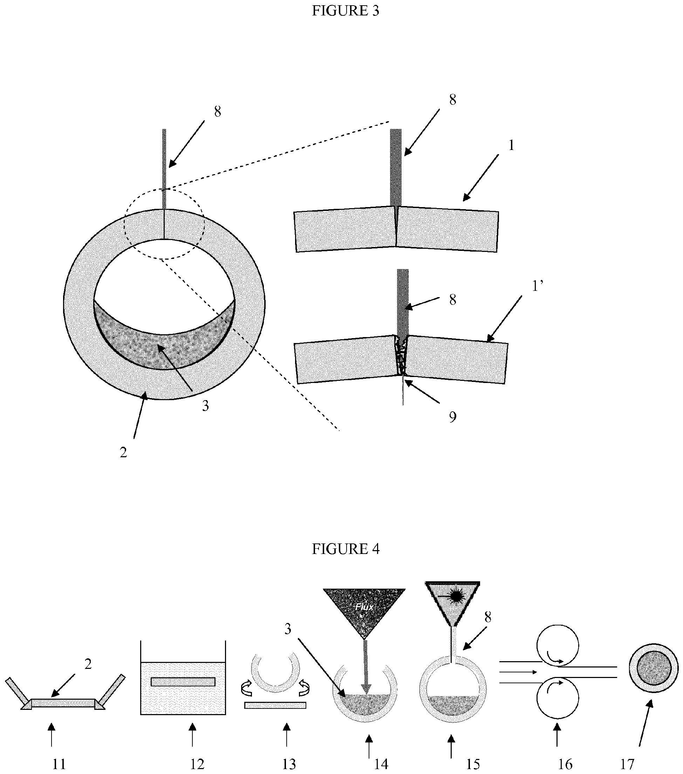

Sur la Figure 1, on peut voir comment se présentent les bords du feuillard 2, c'est-à-dire de l'enveloppe externe métallique, d'un fil fourré 1', après sa mise sensiblement en forme de « O » et son soudage selon un procédé de fabrication avec soudage par faisceau laser 8 selon l'art antérieur, comme schématisé en Figure 3.

On voit que les bords longitudinaux 4, 5 du feuillard 2 ont été rapprochés l'un de l'autre mais qu'il existe toujours un espacement important entre les surfaces latérales des deux bords. Plus précisément, cet espacement est ici de l'ordre de 0,15 mm du côté intérieur et de l'ordre 0,33 mm du côté extérieur du tube. Or, du fait d'un tel écartement résiduel entre les bords à souder, le faisceau laser 8 peut arriver jusque dans le tube 1' et y provoquer des dommages, en particulier détériorer le flux 3 de remplissage qui est typiquement formé de poudres métalliques et/ou non métalliques, en engendrant les problèmes susmentionnés, comme illustré en Figure 3.

Dans le cadre de la présente invention, il a été mis en évidence que cet espacement important avait deux causes principales, à savoir une préparation très insuffisante des surfaces des bords à souder et un réglage inexistant ou imparfait des galets presseurs conduisant à une mauvaise jonction des bords.

Afin d'y remédier, dans le cadre de la présente invention, il a été procédé d'abord à une opération d'usinage de la surface des deux bords de la bande métallique 2 au moyen d'un dispositif de chanfreinage. Cette opération a consisté à usiner les bords 4, 5 de manière à régulariser leurs surfaces 6, 7 et à améliorer ainsi la surface de contact entre les deux bords 4, 5, comme montré en Figures 2 et 3.

Préférentiellement, on opère un usinage par chanfreinage ou par coupage jusqu'à obtenir une rugosité et/ou une irrégularité de la surface des bords inférieure à 50 µm, préférentiellement inférieure ou égale à 10 µm. Un résultat analogue a été obtenu également par coupage des bords au moyen de lames très affûtées en carbure de tungstène.

Ceci contribue à produire un tube quasiment « hermétique » au faisceau laser 8 quand les deux surfaces 4, 5 sont mises en contact l'une de l'autre, juste avant soudage par faisceau laser 8 et donc permet d'éviter que le faisceau 8 ne vienne impacter et détériorer le flux 3 interne contenu dans le fil 1, comme illustré en Figure 3.

Pour mesurer la rugosité obtenue, on utilise un rugosimètre optique, inductif ou mécanique comme décrit par la norme ISO 4288. Si l'on souhaite opérer une mesure en ligne, on utilise préférentiellement un rugosimètre optique ou inductif.

En fait, l'usinage selon l'invention, tel que chanfreinage ou coupage, repose essentiellement sur une élimination régulière de matière, c'est-à-dire de métal, au niveau des surfaces 6, 7 des bords longitudinaux 4, 5 du feuillard 2 (cf. Figure 3) de manière à obtenir des surfaces 6, 7 ou faces latérales aussi « lisses » que possible, c'est-à-dire avec le moins possible de rugosités ou d'aspérités susceptibles d'y créer des espacements importants indésirables, comme expliqué ci-avant et visible sur la Figure 2.

On peut par exemple utiliser une chanfreineuse de référence commerciale *Strip Edge Preparation Unit* ou *DUO 80* - *Duo Edge Trimming Machine*, commercialisée par les sociétés Olimpia80 ou Julius, respectivement.

Des essais réalisés ont montré que procéder à un tel usinage des surfaces 6, 7 du feuillard 2 permettait de réduire considérablement les problèmes de détérioration des constituants du flux car le faisceau laser ne peut plus passer entre les surfaces ainsi usinées, comme illustré sur les Figures 2 et 3.

Toutefois, il a été remarqué que, dans certains cas, ce traitement de surface ne suffisait pas à lui seul. Dès lors, des essais complémentaires ont été menés et ont mis en évidence qu'outre l'usinage préparatoire de surface 6, 7 des bords 4, 5 à souder, il était également souhaitable de contrôler deux autres paramètres, à savoir la pression exercées sur les bords par des galets servant à rapprocher les bords l'un de l'autre, et le positionnement du point d'impact du faisceau laser par rapport aux galets, pour obtenir un résultat encore meilleur.

Tout d'abord, ces essais ont montré que si la force exercée par les galets dans le sens tendant à rapprocher les bords l'un de l'autre, était insuffisante, alors il en résultait un mauvais accostage des bords et un espacement résiduel trop important.

Dès lors, pour y remédier, la pression des galets de soudage doit être réglée ou ajustée de manière à obtenir un espacement, c'est-à-dire un jeu, entre le bords à souder, mesuré au niveau du point d'impact du faisceau laser, inférieur à 50 µm (N12), préférablement inférieur ou égal à 10 µm (N10) environ. Opérer un tel réglage ne pose aucune difficulté en pratique et s'opère directement au niveau des galets en agissant sur des organes de réglage, par exemple par vissage ou dévissage.

La Figure 2 représente une bande d'acier 2 d'un fil fourré 1, à laquelle ont été appliquées les étapes de chanfreinage et de contrôle de l'espacement du procédé selon la présente invention. Comme on le voit, les surfaces 6, 7 des bords longitudinaux 4, 5 sont nettement plus lisses et régulières, c'est-à-dire quasiment sans aspérités, contrairement aux surfaces d'un fil 1' selon l'art antérieur tel que représenté en Figures 1.

Par ailleurs, il est particulièrement avantageux de choisir un positionnement du point d'impact du faisceau laser 8 par rapport aux galets tel que le faisceau laser vienne impacter les bords 4, 5 à souder entre les galets dits de « fermage » ou de « fermeture », et les galets dits de « pression » ou de « soudage », de sorte que le faisceau laser vienne impacter au moins l'un des bords à souder, pendant le serrage des deux bords longitudinaux avec les galets dits de « pression » ou de « soudage » .

En d'autres termes, en choisissant avec soin le positionnement du point d'impact du faisceau laser par rapport aux galets et la pression des galets de soudage, on va réaliser un soudage et un forgeage simultanés.

De façon plus générale, la solution proposée par la présente invention permet de fabriquer un fil fourré 1 à partir d'une bande métallique 2 et d'un flux 3, par exemple une bande métallique 2 en acier et un flux 3 de remplissage pulvérulent ou granulaire comprenant des composés métalliques ou non métalliques choisis parmi les éléments suivants : poudre de fer, rutile, CaF₂, ferroalliages de Mn, Si, Cr, Mo, Ni, B et/ou Ti, ou poudres minérales comme les oxydes de Mg ou Al. Une composition typique d'un tel fil fourré (donnée en masse de poudre) comprend de 50 à 80 % de poudre de fer, de 5 à 15 % ferroalliages au silicium, et de 10 à 30 ferroalliages au manganèse ou du manganèse métallique, et éventuellement un ou plusieurs autres ferroalliages de Ni, Mo et/ou Cr par exemple.

La Figure 4 schématise les principales étapes d'un procédé de fabrication d'un fil fourré 1 selon l'invention.

Une bande métallique en acier est d'abord animée d'un mouvement de déplacement au moyen de galets d'entraînement motorisés par exemple et on opère un usinage (en 11) de la surface latérale des deux bords ou flancs longitudinaux 4, 5 parallèles de la bande métallique 2, en particulier par chanfreinage ou coupage, de sorte de rendre leur surface aussi lisse et régulière que désiré, c'est-à-dire de manière à conférer à leurs surfaces latérales, une rugosité de surface inférieure à 10 µm, de préférence inférieure à 5 µm.

Une fois l'usinage 11 terminé, on réalise avantageusement un nettoyage et un séchage (en 12) des bords longitudinaux chanfreinés de la bande métallique, en particulier une élimination d'huile avec essuyage ou séchage subséquent, de manière à les débarrasser d'éventuels résidus qui pourraient s'y trouver et nuire à leu soudage subséquent.

Ensuite, la bande d'acier est mise en forme de gouttière, c'est-à-dire conformée pour présenter une section en « U » (en 13) par rapprochement de ses bords longitudinaux parallèles, au moyen de galets presseurs.

La gouttière ainsi obtenue est progressivement remplie avec le flux 3 formé d'éléments de remplissage susmentionné (en 14), puis progressivement mise sous forme d'un pré-tube non soudé de section en « O » par rapprochement jusqu'au contact ou quasi-contact l'un de l'autre de ses bords longitudinaux par d'autres galets presseurs, encore appelés galets de « fermage » ou de « fermeture ». Pour ce faire, on règle les galets presseurs de « fermage » pour qu'ils exercent une force mécanique sur la bande métallique tendant à rapprocher les bords longitudinaux l'un de l'autre jusqu'à obtenir un espacement, c'est-à-dire un jeu, entre les surfaces latérales usinées desdits bords inférieur à 50 µm, mesuré au point d'impact du faisceau laser avec le ou les bords longitudinaux à souder.

Le contrôle de la rugosité de surface des bords longitudinaux ou flancs de la bande métallique et le contrôle de l'espacement entre eux permettent d'éviter que le faisceau laser ne pénètre dans le tube et vienne y détériorer les éléments métalliques ou non métalliques formant le flux de remplissage.

Le soudage des bords chanfreinés est réalisé (en 15) au moyen d'un faisceau laser, par exemple un faisceau laser généré par une source laser de type CO₂, à diodes, à disques ou à fibres, notamment à fibres d'ytterbium. La puissance laser mise en œuvre est généralement comprise entre 3 et 12 kW.

Pour améliorer le soudage des deux bords, on positionne, on oriente et/ou on ajuste le faisceau laser 8 de manière à ce qu'il vienne impacter au moins l'un des bords à souder, pendant la compression des bords 4, 5 l'un vers l'autre pour obtenir le mise en contact total ou quasi-total des surfaces latérales usinées l'une avec l'autre de manière à engendrer un soudage et forgeage simultanés ou quasi-simultanés desdits bords.

Enfin, le tube 1 soudé contenant le flux 3 peut subir des opérations subséquentes de laminage et/ou tréfilage (en 16) jusqu'à son diamètre final (17) désiré, typiquement de l'ordre de 0,5 à 5 mm.

Le fil fourré ainsi obtenu peut être utilisé dans tout procédé de soudage à l'arc, notamment un procédé MIG/MAG ou à l'arc submergé.

## Revendications

1. Procédé de fabrication d'un fil fourré (1) à partir d'une bande métallique (2) et d'un flux interne (3), comprenant les étapes de :
a) conformer (13) une bande métallique (2) ayant deux bords longitudinaux (4, 5) parallèles en une gouttière de section en « U » par rapprochement de ses bords longitudinaux (4, 5),
b) remplir (14) au moins partiellement la gouttière obtenue à l'étape a) avec un flux (3),
c) conformer la gouttière de section en « U » contenant le flux (3) obtenue à l'étape b) par rapprochement jusqu'au contact ou quasi-contact l'un de l'autre, desdits bords (4, 5) longitudinaux pour obtenir un pré-tube de section en « O », et
d) souder (15) au moyen d'un faisceau laser, les bords longitudinaux (4, 5) l'un avec l'autre,
**caractérisé en ce qu'**il comprend en outre:
une étape supplémentaire i) préalablement à l'étape a), opérer un usinage (11) de la surface latérale (6,7) d'au moins l'un des deux bords (4, 5) longitudinaux parallèles de la bande métallique pour conférer à ladite au moins une surface latérale (6, 7) dudit au moins un bord longitudinal, une rugosité de surface inférieure à 50 µm.

2. Procédé selon la revendication précédente, **caractérisé en ce qu'** à l'étape i), l'usinage (11) est un chanfreinage ou un coupage.

3. Procédé selon la revendication précédente, **caractérisé en ce qu'** à l'étape i), le coupage est opéré avec un ou des couteaux ou lames.

4. Procédé selon l'une des revendications précédentes, **caractérisé en ce qu'** à l'étape i), l'usinage (11) est opéré sur la surface latérale (6, 7) des deux bords (4, 5) longitudinaux parallèles de la bande métallique (2).

5. Procédé selon l'une des revendications précédentes, **caractérisé en ce qu'** à l'étape i), on opère un usinage (11) de la surface latérale (6, 7) pour conférer à la surface latérale des bords longitudinaux (4, 5), une rugosité de surface inférieure à 10 µm, de préférence inférieure ou égale à 5 µm.

6. Procédé selon l'une des revendications précédentes, **caractérisé en ce qu'**il comprend en outre:
une étape supplémentaire ii) à l'étape c), rapprocher l'un de l'autre les bords (4, 5) longitudinaux jusqu'à obtenir un espacement entre les surfaces latérales (6, 7) desdits bords longitudinaux inférieur à 50 µm, mesuré au point d'impact du faisceau laser avec le ou les bords longitudinaux (4, 5) à souder.

7. Procédé selon revendication 6, **caractérisé en ce qu'** à l'étape ii), le rapprochement l'un de l'autre des bords longitudinaux (4, 5) est réalisé au moyen de galets presseurs.

8. Procédé selon l'une des revendications 6 ou 7, **caractérisé en ce qu'** à l'étape ii), on rapproche l'un de l'autre les bords longitudinaux (4, 5) jusqu'à obtenir un espacement entre les surfaces latérales (6, 7) desdits bords longitudinaux (4, 5) inférieur à 10 µm, de préférence inférieure ou égale à 5 µm.

9. Procédé selon l'une des revendications 6 à 8, **caractérisé en ce que** les étapes a) à d), i) et ii) sont opérées en continu en conférant à la bande métallique (2) une vitesse de déplacement d'au moins 10 m/min, de préférence d'au moins 15 m/min.

10. Procédé selon l'une des revendications précédentes, **caractérisé en ce que** le faisceau laser vient impacter au moins l'un des bords (4, 5) à souder pendant la compression l'un vers l'autre, desdits bords longitudinaux (4, 5) à l'étape c) de manière à engendrer un soudage et un forgeage simultanés desdits bords (4, 5).

11. Procédé selon l'une des revendications précédentes, **caractérisé en ce qu'**il comprend, préalablement à l'étape b), une étape additionnelle de nettoyage et/ou de séchage (12) d'au moins les bords longitudinaux (4, 5) de la bande métallique (2).

12. Procédé selon l'une des revendications précédentes, **caractérisé en ce qu'**il comprend en outre au moins l'une des étapes supplémentaires e) à g) suivantes :
e) laminage (16) du fil fourré étanche (1) obtenu à l'étape d),
f) recuit du fil fourré étanche (1) obtenu à l'étape d), et
g) tréfilage du fil fourré étanche (1) obtenu à l'étape d).

13. Procédé selon l'une des revendications précédentes, **caractérisé en ce qu'** on obtient un fil fourré soudé ayant un diamètre final compris entre 0,5 et 5 mm, de préférence entre 1 et 4 mm.

## Patentansprüche

1. Verfahren zur Herstellung eines Fülldrahts (1) aus einem Metallstreifen (2) und einem inneren Flussmittel (3), umfassend die folgenden Schritte:
a) Formen (13) eines Metallstreifens (2) mit zwei parallelen Längskanten (4, 5) zu einer Rinne mit U-förmigem Querschnitt durch Annähern seiner Längskanten (4, 5),
b) Füllen (14) der in Schritt a) erhaltenen Rinne zumindest teilweise mit einem Flussmittel (3),
c) Formen der Rinne mit U-förmigem Querschnitt, die das in Schritt b) erhaltene Flussmittel (3) enthält, durch Annähern der Längskanten (4, 5) bis sie miteinander in Kontakt oder Quasi-Kontakt treten, um ein Vorrohr mit O-förmigem Querschnitt zu erhalten, und
d) Verschweißen (15) der Längskanten (4, 5) miteinander mittels eines Laserstrahls,
**dadurch gekennzeichnet, dass** es ferner umfasst:
einen zusätzlichen Schritt i) vor Schritt a), nämlich Ausführen einer Bearbeitung (11) der Seitenfläche (6, 7) von mindestens einer der beiden parallelen Längskanten (4, 5) des Metallstreifens, um der mindestens einen Seitenfläche (6, 7) der mindestens einen Längskante eine Oberflächenrauhigkeit von weniger als 50 µm zu verleihen.

2. Verfahren nach dem vorhergehenden Anspruch, **dadurch gekennzeichnet, dass** es sich bei der Bearbeitung (11) in Schritt i) um ein Anfasen oder Schneiden handelt.

3. Verfahren nach dem vorhergehenden Anspruch, **dadurch gekennzeichnet, dass** in Schritt i) das Schneiden mit einem oder mehreren Messern oder Klingen durchgeführt wird.

4. Verfahren nach einem der vorhergehenden Ansprüche, **dadurch gekennzeichnet, dass** in Schritt i) die Bearbeitung (11) an der Seitenfläche (6, 7) der beiden parallelen Längskanten (4, 5) des Metallstreifens (2) durchgeführt wird.

5. Verfahren nach einem der vorhergehenden Ansprüche, **dadurch gekennzeichnet, dass** in Schritt i) eine Bearbeitung (11) der Seitenfläche (6, 7) ausgeführt wird, um der Seitenfläche der Längskanten (4, 5) eine Oberflächenrauhigkeit von weniger als 10 µm, vorzugsweise von weniger als oder gleich 5 µm, zu verleihen.

6. Verfahren nach einem der vorhergehenden Ansprüche, **dadurch gekennzeichnet, dass** es ferner umfasst:
einen zusätzlichen Schritt ii) in Schritt c), nämlich Annähern der Längskanten (4, 5) bis ein Abstand zwischen den Seitenflächen (6, 7) dieser Längskanten erhalten wird, der kleiner als 50 µm ist, gemessen am Auftreffpunkt des Laserstrahls auf die zu verschweißende(n) Längskante(n) (4, 5).

7. Verfahren nach Anspruch 6, **dadurch gekennzeichnet, dass** in Schritt ii) das Annähern der Längskanten (4, 5) mit Hilfe von Druckrollen erfolgt.

8. Verfahren nach einem der Ansprüche 6 oder 7, **dadurch gekennzeichnet, dass** in Schritt ii) die Längskanten (4, 5) einander angenähert werden, bis ein Abstand zwischen den Seitenflächen (6, 7) der Längskanten (4, 5) erhalten wird, der kleiner als 10 µm ist, vorzugsweise kleiner als oder gleich 5 µm.

9. Verfahren nach einem der Ansprüche 6 bis 8, **dadurch gekennzeichnet, dass** die Schritte a) bis d), i) und ii) kontinuierlich ausgeführt werden, indem dem Metallstreifen (2) eine Laufgeschwindigkeit von mindestens 10 m/min verliehen wird, vorzugsweise von mindestens 15 m/min.

10. Verfahren nach einem der vorhergehenden Ansprüche, **dadurch gekennzeichnet, dass** der Laserstrahl auf mindestens eine der zu verschweißenden Kanten (4, 5) während des Zusammendrückens der Längskanten (4, 5) in Schritt c) derart auftrifft, dass ein gleichzeitiges Verschweißen und Schmieden der Kanten (4, 5) bewirkt wird.

11. Verfahren nach einem der vorhergehenden Ansprüche, **dadurch gekennzeichnet, dass** es vor dem Schritt b) einen zusätzlichen Schritt des Reinigens und/oder Trocknens (12) mindestens der Längskanten (4, 5) des Metallstreifens (2) umfasst.

12. Verfahren nach einem der vorhergehenden Ansprüche, **dadurch gekennzeichnet, dass** es ferner mindestens einen der folgenden zusätzlichen Schritte e) bis g) umfasst:
e) Walzen (16) des in Schritt (d) erhaltenen dichten Fülldrahts (1),
f) Glühen des in Schritt (d) erhaltenen dichten Fülldrahts (1), und
g) Ziehen des in Schritt d) erhaltenen dichten Fülldrahts (1).

13. Verfahren nach einem der vorhergehenden Ansprüche, **dadurch gekennzeichnet, dass** ein verschweißter Fülldraht mit einem Enddurchmesser zwischen 0,5 und 5 mm erhalten wird, vorzugsweise zwischen 1 und 4 mm.

## Claims

1. A method for manufacturing a cored wire (1) from a metallic strip (2) and an internal flux (3), comprising the steps of:
a) shaping (13) a metallic strip (2) having two parallel longitudinal edges (4, 5) to obtain a U-sectioned groove by bringing its longitudinal edges (4, 5) closer to each other,
b) at least partially filling (14) the groove obtained in step a) with a flux (3),
c) shaping the U-sectioned groove containing the flux (3) obtained in step b) by bringing said longitudinal edges (4, 5) into contact or near contact with each other to obtain an O-sectioned pre-tube, and
d) welding (15) the longitudinal edges (4, 5) to each other by a laser beam,
**characterised in that** the method also comprises:
an additional step i), prior to step a), of machining (11) the side surface (6, 7) of at least one of the two parallel longitudinal edges (4, 5) of the metallic strip to confer on said at least one side surface (6, 7) of said at least one longitudinal edge a surface roughness of less than 50 µm.

2. The method according to the preceding claim, **characterised in that** in step i) the machining (11) is a chamfering or a cutting.

3. The method according to the preceding claim, **characterised in that** in step i) the cutting is performed with one or more cutters or blades.

4. The method according to any one of the preceding claims, **characterised in that** in step i) the machining (11) is performed on the side surface (6, 7) of the two parallel longitudinal edges (4, 5) of the metallic strip (2).

5. The method according to any one of the preceding claims, **characterised in that** in step i) the side surface (6, 7) is machined (11) to confer on the side surface of the two longitudinal edges (4, 5) a surface roughness of less than 10 µm, preferably less than or equal to 5 µm.

6. The method according to any one of the preceding claims, **characterised in that** it also comprises:
in step c) an additional step ii) of bringing the longitudinal edges (4, 5) closer to each other until a spacing is obtained between the side surfaces (6, 7) of said longitudinal edges of less than 50 µm, measured at the impact point of the laser beam with the longitudinal edge(s) (4, 5) to be welded.

7. The method according to claim 6, **characterised in that** in step ii) the longitudinal edges (4, 5) are brought closer to each other by means of pressing rollers.

8. The method according to ether one of claims 6 or 7, **characterised in that** in step ii) the longitudinal edges (4, 5) are brought closer to each other until a spacing is obtained between the side surfaces (6, 7) of said longitudinal edges (4, 5) of less than 10 µm, preferably less than or equal to 5 µm.

9. The method according to any one of claims 6 to 8, **characterised in that** steps a) to d), i) and ii) are performed continuously, conferring to the metallic strip (2) a rate of displacement of at least 10 m/min, preferably at least 15 m/min.

10. The method according to any one of the preceding claims, **characterised in that** the laser beam impacts at least one of the edges (4, 5) to be welded during the compression towards the other of said longitudinal edges (4, 5) in step c) to generate a simultaneous welding and forging of said edges (4, 5).

11. The method according to any one of the preceding claims, **characterised in that** it comprises, prior to step b), an additional step of cleaning and/or drying (12) of at least one of the longitudinal edges (4, 5) of the metallic strip (2).

12. The method according to any one of the preceding claims, **characterised in that** it also comprises at least one of the following additional steps e) to g):
e) rolling (16) the sealed cored wire (1) obtained in step d),
f) annealing the sealed cored wire (1) obtained in step d), and
g) wire drawing the sealed cored wire (1) obtained in step d).

13. The method according to any one of the preceding claims, **characterised in that** a welded cored wire having a final diameter between 0.5 and 5 mm, preferably between 1 and 4 mm, is obtained.
